# EUROPÄISCHE PATENTSCHRIFT

(11) **EP 1 069 969 B1**
(45) Veröffentlichungstag und Bekanntmachung des Hinweises auf die Patenterteilung: **06.03.2002**
(21) Anmeldenummer: 99913113.9
(22) Anmeldetag: 11.03.1999
(51) Int. Cl.: B23Q 1/01, B23Q 1/58, E05D 15/06, B23Q 1/42

(54) **LINEAREINHEIT MIT EINER GLEITFÜHRUNG FÜR EINEN SCHLITTEN**
LINEAR UNIT WITH A SLIDING GUIDE FOR A SLIDE
UNITE DE DEPLACEMENT LINEAIRE A GUIDAGE GLISSANT POUR UN COULISSEAU

(30) Priorität: 07.04.1998 DE 19815474
(43) Veröffentlichungstag der Anmeldung: 24.01.2001
(73) Patentinhaber: ROBERT BOSCH GMBH, 70442 Stuttgart (DE)
(72) Erfinder: KOBAN, Johannes, D-70178 Stuttgart (DE)
(86) Internationale Anmeldenummer: DE9900656
(87) Internationale Veröffentlichungsnummer: WO9951390

(56) Entgegenhaltungen:
- DE-A- 3 631 401
- DE-U- 29 613 666
- GB-A- 1 095 391
- "Mechanik-Grundelemente (Ausagbe 7.0)" Oktober 1997 , ROBERT BOSCH GMBH - GESCHÄFTSBEREICH AUTOMATIONSTECHNIK , STUTTGART (DE) XP002108578 in der Anmeldung erwähnt siehe Seite 9.3 Gleiter LE10 (3 842 515 272)

## Beschreibung

### Stand der Technik

Die Erfindung geht aus von einer Linearführungseinheit mit einer Gleitführung für einen Schlitten nach der Gattung des Hauptanspruchs.

Eine solche Linearführungseinheit ist bereits aus dem Katalog Mechanik-Grundelemente '96/'97, Seite 9-3 der Robert Bosch GmbH, Stuttgart bekannt. Die Linearführungseinheit besteht aus einer Gleitführung und einem als Schiebetür ausgebildeten Schlitten, der auf einem Führungsprofil mit Hilfe von Gleitelementen geführt wird. Das Führungsprofil weist entlang seiner längsseitigen Außenflächen Nuten auf, in denen die am Schlitten fixierten Gleitelemente gleitend führbar sind. Die herstellungsbedingten Toleranzen des Führungsprofiles, das in aller Regel stranggepreßt wird, erfordern, daß die Gleitelemente in den Nuten ein großes Spiel haben, so daß sie nicht klemmen. Für Anwendungen, die eine höhere Präzision, d.h. ein geringeres Spiel erfordern, zum Beispiel wenn Werkstücke positioniert werden sollen, sind diese Linearführungseinheiten jedoch ungeeignet.

Die DE 36 31 401 A zeigt eine Linearführung mit einem Verstellelement, das durch Bohrungen in einem Schlitten geführt ist und mit Ausnehmungen von Wälzelementen zur Spieleinstellung zusammenwirkt.

Aus der GB-A-1 095 391 geht eine Linearführungseinheit mit einer Gleitführung für einen Schlitten auf einem Führungsprofil hervor. Zwei Gleitelemente sind am Schlitten fixierbar und am Führungsprofil gleitend führbar. Es sind Einrichtungen vorgesehen, mit denen die Gleitelemente zur Spieleinstellung der Gleitführung quer zur Führungsrichtung des Führungsprofils bewegbar sind.

Aufgabe der vorliegenden Erfindung ist es, die gattungsgemäße Linearführungseinheit so weiterzubilden, daß der Zugang zu den Gleitelementen vereinfacht und eine kontrollierte Spieleinstellung möglich ist. Gelöst wird diese Aufgabe mit den Merkmalen des Anspruchs 1.

### Vorteile der Erfindung

Die erfindungsgemäße Linearführungseinheit mit einer Gleitführung für einen Schlitten mit den kennzeichnenden Merkmalen des Hauptanspruchs hat den Vorteil, daß das Spiel der Gleitführung eingestellt und somit den spezifischen Anforderungen angepaßt werden kann. Besonders einfach ist es hierbei, Einrichtungen in Form von Ausnehmungen vorzusehen, die in einem Schlitten und in Gleitelementen ausgebildet sind und in die ein Bolzen mit einem exzentrisch angeformten Zapfen führbar ist. Gleitführungen von einem einfachen Aufbau lassen sich umsetzen, wenn entlang der Außenflächen eines Führungsprofils Nuten ausgebildet sind, in denen Fortsätze der Gleitelemente führbar sind. Durch die Ausbildung von Fortsätzen mit verschieden großen Gleitflächen zur Auflage auf dem Führungsprofil läßt sich die Flächenpressung einstellen. Die Reibung und der reibungsbedingte Verschleiß lassen sich durch Ausnehmungen zur Aufnahme von Schmiermittel verbessern. Durch Fortsätze an den Gleitelementen, die an verschiedene Nutformen angepaßt sind, läßt sich ein besserer Formschluß erzielen. Eine vorteilhafte Alternative ist es, anstelle von Ausnehmungen zur Spieleinstellung an den Gleitelementen Fortsätze anzuformen. Eine weitere vorteilhafte Abwandlungsmöglichkeit ist es, statt Fortsätzen an den Gleitelementen, die in Nuten an einem Führungsprofil greifen, an den Gleitelementen Ausnehmungen vorzusehen, mit denen die Fortsätze, die am Führungsprofil ausgebildet sind, zusammenwirken.

### Zeichnung

Ein Ausführungsbeispiel der Erfindung ist in der Zeichnung dargestellt und in der nachfolgenden Beschreibung näher erläutert. Es zeigen:
Figur 1 eine ersten Lineareinheit mit einer Gleitführung in einer perspektivischen Explosionsdarstellung,
Figur 2 eine Stirnansicht der Lineareinheit nach Figur 1 in montiertem Zustand,
Figur 3 eine Stirnansicht einer zweiten Lineareinheit,
Figur 4 eine Stirnansicht einer dritten Lineareinheit und
Figur 5 sowie Figur 6 zwei abgewandelte Gleitelemente.

### Beschreibung

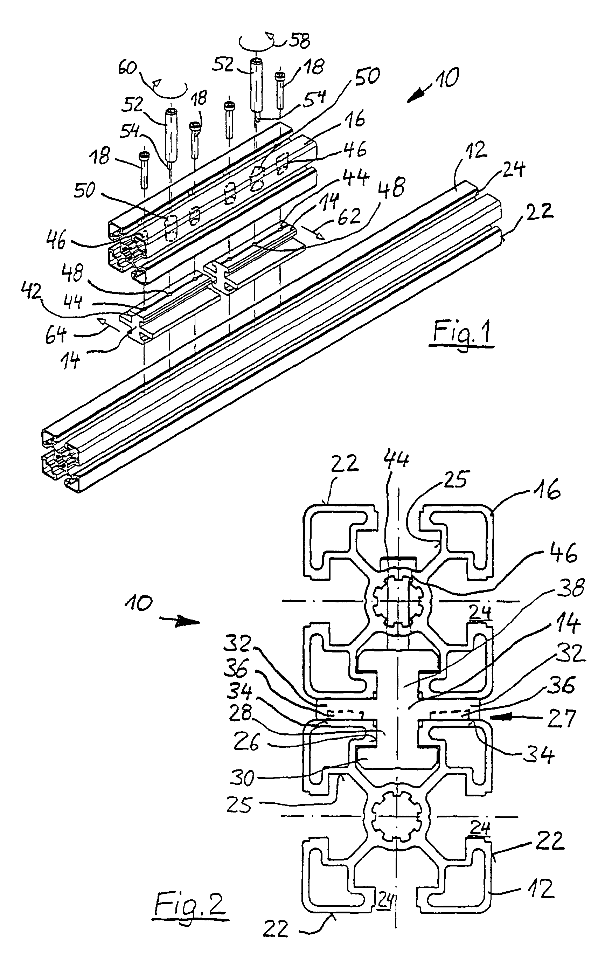

In den Figuren 1 und 2 ist eine erste Lineareinheit 10 gezeigt, die im wesentlichen aus einem Führungsprofil 12, zwei ersten Gleitelementen 14 und einem Schlitten 16 besteht. Die Gleitelemente 14 sind mit jeweils zwei Schrauben 18 am Schlitten 16 fixierbar.

Das Führungsprofil 12 und der parallel dazu angeordnete Schlitten 16 sind beispielsweise aus dem Katalog Mechanik-Grundelemente '96/'97 der Robert Bosch GmbH, Stuttgart bekannte Profilstangen mit im wesentlichen rechteckiger Außenkontur. Bis auf die Länge sind das Führungsprofil 12 und der Schlitten 16 gleich ausgebildet. Im dargestellten Ausführungsbeispiel ist der Schlitten wesentlich kürzer als das Führungsprofil 12. Das Führungsprofil 12 kann fest mit einer Unterlage verbunden sein. Es ist jedoch auch möglich, daß der Schlitten 16 feststeht und das Führungsprofil 12 beweglich angeordnet ist. Das Führungsprofil 12 und der Schlitten 16 weisen entlang ihrer längsseitigen Außenflächen 20 Nuten 24 mit einem Hinterschnitt 25 auf. Die Längsachsen der Nuten 24 entsprechen außerdem der Führungsrichtung des Führungsprofils 12.

Wie besonders aus der Figur 2 hervorgeht sind die Gleitelemente 14 von der Stirnseite des Führungsprofils 12 her mit ersten Fortsätzen 26 in das Führungsprofil 12 einführbar. Die ersten Fortsätzen 26 sind der Form der Nuten 24 angepaßt und sind im Führungsprofil 12 gleitend geführt. Es handelt sich also um eine Gleitführung 27 für den Schlitten 16 auf dem Führungsprofil 12. Hierzu haben die ersten Fortsätze 26 ein über einen Steg 28 mit dem übrigen Gleitelement 14 verbundenes T-förmiges Ende 30. Ein Steg 28 hat eine schmalere Breite als die Nuthälse der Nuten 24. Das T-förmige Ende 30 ist ebenfalls schmaler ausgebildet als die Breite der Hinterschnitte 25 der Nuten 24. Durch das T-förmige Ende 30 entsteht ein Formschluß, wodurch sich der Schlitten 16 nur entlang der Führungsrichtung des Führungsprofils 12 bewegen läßt. Zumindest eine der Seitenflächen des Stegs 28 gleitet im Betrieb der Linearführung 10 entlang einer Seitenfläche eines Nuthalses einer Nut 24.

Die Gleitelemente 14 haben weiterhin jeweils zwei zweite Fortsätze 32, die senkrecht zu den ersten Fortsätzen 26 und zwischen dem Schlitten 16 und dem Führungsprofil 12 angeordnet sind. Die zweiten Fortsätze 32 haben weiterhin Gleitflächen 34, die am Führungsprofil 12 aufliegen. Vorteilhafterweise sind in den Gleitflächen 34 Ausnehmungen 36 zur Aufnahme von Schmiermittel ausgebildet, wodurch die Reibung und der reibungsbedingte Verschleiß minimiert werden.

Die Gleitelemente 14 weisen dritte Fortsätze 38 auf, die so ausgebildet sind wie die ersten Fortsätze 26 und mit diesen fluchten. Wenn es die konstruktiven Umstände erfordern, können die dritten Fortsätze 38 gegenüber den ersten Fortsätzen 26 versetzt angeordnet sein.

Wie besonders aus der Figur 1 hervorgeht, weisen die dritten Fortsätze 38 an einer Fläche 40 eine keilförmige Nut 42 auf, die vorteilhafterweise als Bohrhilfe verwendbar ist. Entlang dieser Nut 42 sind Befestigungsbohrungen 44 angebracht. Es können aber aufgrund der Nut 42 leicht Bohrungen an anderen Stellen angebracht werden. Die Befestigungsbohrungen 44 dienen der Befestigung der Gleitelemente 14 am Schlitten 16 mit Hilfe der Schrauben 18. Der Schlitten 16 weist hierfür vier mit den Befestigungsbohrungen 44 fluchtenden Durchgangsbohrungen 46 für die Schrauben 18 auf. Die Befestigungsbohrungen 44 sind Gewindebohrungen. Es können alternativ Schrauben 18 mit einem selbstschneidendem Gewinde verwendet werden. Auch können zur Befestigung der Gleitelemente 14 auf der Gegenseite nicht dargestellte eingelegte Muttern verwendet werden.

Zwischen den beiden Befestigungsbohrungen 44 ist in jedem Gleitelement 14 eine erste Ausnehmung in Form einer weiteren Bohrung - im Folgenden Einstellbohrung 48 genannt - ausgebildet. Im Schlitten 16 ist zwischen den beiden Durchgangsbohrungen 46 ebenfalls eine zweite Ausnehmung in Form einer zusätzlichen Bohrung - im Folgenden Durchführbohrung 50 genannt - vorhanden. Die Durchführbohrung 50 hat einen solchen Durchmesser, daß Bolzen 52, von denen in der Figur 1 oberhalb des Schlittens 16 zwei dargestellt sind, durchgeführt werden können. Die Bolzen 52 haben an einer Stirnseite eine sechskantförmige Ausnehmung für ein nicht dargestelltes Werkzeug und an der anderen Stirnseite einen Zapfen 54, der exzentrisch ausgebildet ist. Die Einstellbohrung ist weiterhin so angeordnet, daß die Bolzen 52 durch die Durchführbohrung 50 führbar sind und der exzentrisch angeordnete Zapfen 54 in die Einstellbohrung 48 greifen kann. Der Bolzen 52 mit dem Zapfen 54 ist ein Verstellelement, worauf im Folgenden noch genauer eingegangen wird.

Bei der Montage der Lineareinheit 10 werden zuerst die Gleitelemente 14 von einer der Stirnseiten des Schlittens 14 her in eine der Nuten 24 eingeführt, bis die Befestigungsbohrungen 44 mit den Durchgangsbohrungen 46 fluchten. Danach werden die Schrauben 18 durch die Durchgangsbohrungen 46 geführt und in die Befestigungsbohrungen 44 gedreht, bis die Gleitelemente 14 noch etwas beweglich sind. Dann wird der Schlitten 16 zusammen mit den Gleitelementen 14 von einer der Stirnseiten des Führungsprofils 12 her in einer der Nuten 24 des Führungsprofils 21 angebracht. Als nächstes wird ein Bolzen 52 durch die Durchführbohrungen 50 geführt, bis der Zapfen 54 in die Einstellbohrung 48 greift. Da der Zapfen 54 exzentrisch angeordnet ist, sind die Gleitelemente 14 bei einer Drehbewegung des Bolzens 52 in die in der Figur 1 mit zwei Pfeilen 58, 60 angegebenen Drehrichtung quer zur Führungsrichtung des Führungsprofils 12 bewegbar. Mit zwei Pfeilen 62, 64 sind die Verschieberichtungen der Gleitelemente 14, die mit den Pfeilen 58, 60 für die Drehbewegungen der Bolzen 52 korrespondieren, dargestellt. Dadurch ist eine Spieleinstellung der Gleitführung 27 möglich. Die Gleitelemente 14 können so eingestellt werden, daß eines der Gleitelemente 14 mit einer Seitenfläche des Stegs 28 flach an der einen Seitenwand eines Nuthalses einer Nut 24 zur Anlage kommt und das andere Gleitelement 14 mit einer Seitenfläche des Stegs 28 flach an der anderen Seitenwand eines Nuthalses einer Nut 24. In diesem Fall ist das Spiel gänzlich herausgenommen. Es kann aber auch etwas mehr Spiel gelassen werden. Das Spiel kann an die jeweiligen Anforderungen, insbesondere an die Präzision, angepaßt werden.

Bei den ersten Ausnehmungen in Form von Einstellbohrungen 48, den als Durchführbohrungen 52 ausgebildeten zweiten Ausnehmungen und dem als Verstellelement fungierenden Bolzen 52 mit dem Zapfen 54 handelt es sich also um Einrichtungen, mit denen die Gleitelemente 14 zur Spieleinstellung der Gleitführung 27 quer zur Führungsrichtung des Führungsprofils 12 bewegbar sind.

In der Figur 3 ist eine zweite, abgewandelte Lineareinheit 10a gezeigt. Das Führungsprofil 12a ist ungefähr doppelt so breit wie das Führungsprofil 12 und hat in zwei sich gegenüberliegenden Außenflächen 20a jeweils zwei Nuten 24. Der Schlitten 16a hat die gleiche Querschnittsfläche wie das Führungsprofil 12a ist jedoch wesentlich kürzer. Am Schlitten 16a sind in zwei parallelen Nuten 24, die dem Führungsprofil 12a zugewandt sind, zwei Gleitelemente 14 befestigt. Die Gleitführung 27a ist im Gegensatz zur Gleitführung 27 somit breiter und kann höhere Momente, die um die Achse der Führungsrichtung des Führungsprofils 12a wirken, aufnehmen. In einer Nut 24 des Schlittens 16a können bei höheren Belastungen auch zwei Gleitelemente 14 hintereinander angeordnet werden. Der Ablauf der Einstellung des Spiels der Gleitführung 27a erfolgt analog zu jener der Gleitführung 27.

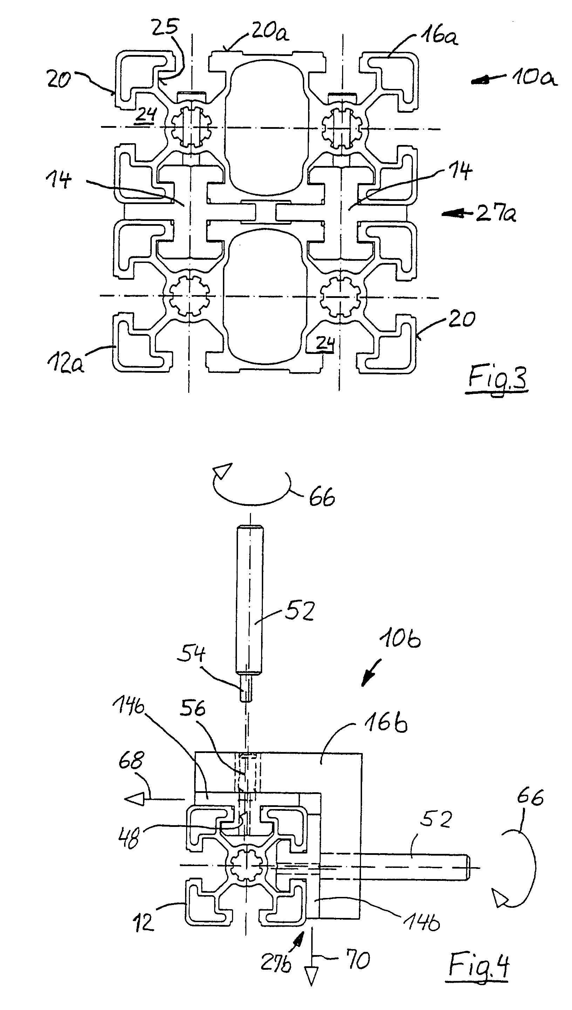

Aus der Figur 4 geht eine dritte abgewandelte Lineareinheit 10b mit einem abgewandelten Schlitten 16b, der als L-Profil ausgebildet ist, hervor. Er ist im Bereich zweier rechtwinklig zueinander stehender Außenflächen 20 eines Führungsprofils 12 angeordnet. Die Gleitelemente 14b sind mit angedeuteten Gewindestiften 56 am Schlitten 16b befestigt. Es können aber auch Schrauben 18 verwendet werden. Wie weiterhin aus der Figur 4 hervorgeht weisen die Gleitelemente 14b im Gegensatz zu den Gleitelementen 14 keine dritten Fortsätze 32 auf. Durch die mit Pfeilen 66 gezeigten Drehbewegungen mit den Bolzen 52 lassen sich die Gleitelemente 14 in die mit zwei Pfeilen 68, 70 angedeuteten Richtungen verschieben, um das Spiel in der Gleitführung 27b einzustellen. In Abhängigkeit von den konstruktiven Umständen kann die Drehrichtung der Bolzen 52 und damit der Einstellung der Gleitelemente auch entgegengesetzt ausgeführt sein. Weiterhin kann in abgewandelter Form der Schlitten statt L-förmig U-förmig ausgebildet sein und zum Beispiel in jeweils einer Nut 24 von drei Außenflächen 22 geführt und eingestellt werden. Alternativ kann ein Schlitten so ausgebildet sein, daß er das Führungsprofil 12 vollständig umfaßt und das Spiel der Gleitführung an allen Seiten eingestellt wird.

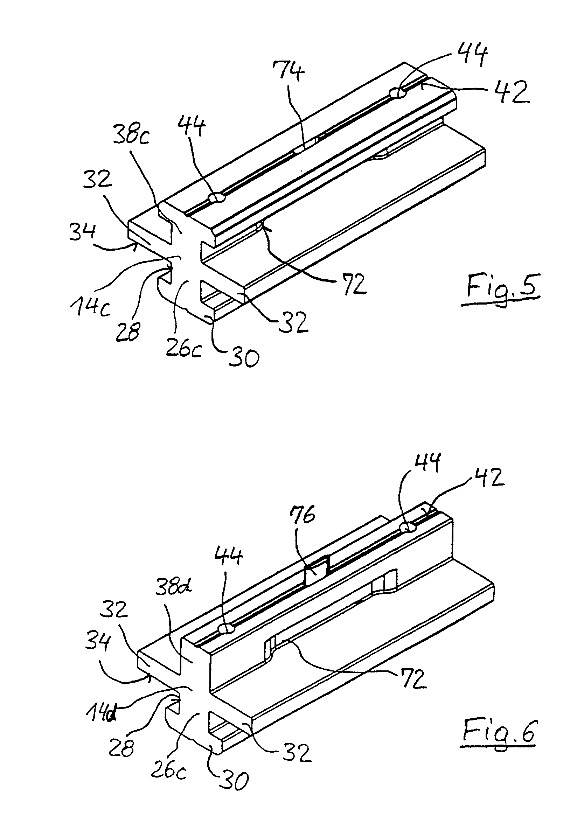

Aus der Figur 5 geht ein Gleitelement 14c hervor, an dessen ersten und dritten Fortsatz 26c und 38c entlang der Seitenflächen, die auf den Flächen eines Nuthalses einer Nut 24 aufliegen bzw. gleiten, Ausnehmungen 72 ausgebildet sind. An den beiden Enden bleibt die Gleitfläche bestehen. Dadurch wirken sich in vorteilhafterweise Verwindungen insbesondere des Führungsprofils 12 weniger stark aus. Auch kann in den Ausnehmungen des dritten Fortsatzes 38c Schmiermittel gespeichert werden. Zwischen den beiden Befestigungsbohrungen 44 ist im Gleitelement 14c eine Ausnehmung in Form eines Schlitzes 74 ausgebildet. In diesen Schlitz 74 kann beispielsweise ein Schraubendreher gesteckt werden, der durch eine Durchführbohrung 46 des Schlitten 14 geführt wird. Damit läßt sich das Gleitelement 14c quer zur Führungsrichtung des Führungsprofils 12 verdrehen und somit bewegen, wodurch ebenfalls das Spiel einer Gleitführung 27, 27a, 27b eingestellt werden kann.

In der Figur 6 ist ein abgewandeltes Gleitelement 14d gezeigt, dessen dritter Fortsatz 38d kein T-förmiges Ende 30 aufweist. Anstelle einer Ausnehmung in Form einer Einstellbohrung 48 oder eines Schlitzes 74 ist hier ein stegförmiger Fortsatz 76 ausgebildet, der von einem angepaßten Verstellelement - unter Umständen paßt die sechskantförmige Ausnehmung des Bolzens 52 - umgriffen werden kann, so daß auf diese Art das Spiel einer Gleitführung 27, 27a, 27b einstellbar ist.

Ein Führungsprofil kann alternativ anstelle der Nuten 24 entlang seiner längsseitigen Außenflächen Fortsätze aufweist, die in korrespondierende Ausnehmungen eingreifen, die an entsprechend ausgebildeten Gleitelementen ausgebildet sind.

Ein Führungsprofil kann auch aus mehreren Profilstäben zusammengesetzt sein, wobei in jedem Profilstab mindestens eine Nut ausgebildet ist. Ein Schlitten kann ebenfalls aus mehreren Teilen zusammengesetzt sein.

Es können anstelle von Nuten 24 mit einem Hinterschnitt 25 auch andere Nutformen eingesetzt werden. Die Querschnittsfläche kann keilförmig, schwalbenschwanzförmig oder halbrund sein. Auch können Nuten mit verschiedenen Formen an einem Führungsprofil ausgebildet sein. Eine dabei entstehende Gleitführung muß lediglich so ausgebildet sein, daß ein Schlitten im Betrieb nur entlang der Führungsrichtung des Führungsprofils bewegbar ist.

## Patentansprüche

1. Linearführungseinheit (10, 10a, 10b) mit einer Gleitführung (27, 27a, 27b) für einen Schlitten (16, 16a, 16b) auf einem Führungsprofil (12, 12a) und mit mindestens zwei Gleitelementen (14, 14b, 14c, 14d), die am Schlitten (16, 16a, 16b) fixierbar sind und die am Führungsprofil (12, 12a) gleitend führbar sind, wobei entlang der längsseitigen Außenflächen des Führungsprofiles (12, 12a) Nuten (24) ausgebildet sind, in denen mindestens erste Fortsätze (26, 26c) der Gleitelemente (14, 14b, 14c, 14d) geführt sind oder wobei das Führungsprofil entlang seiner längsseitigen Außenflächen Fortsätze aufweist, die in Ausnehmungen eingreifen, die an den Gleitelementen ausgebildet sind, **dadurch gekennzeichnet, daß** die Gleitelemente (14, 14b, 14c, 14d) Ausnehmungen (48, 74) oder Einstellfortsätze (76) aufweisen, die mit einem als Werkzeug dienenden Verstellelement (52, 54) zusammenwirken, das durch Bohrungen (50) im Schlitten (16, 16a, 16b) führbar ist und mit dem die Gleitelemente (14, 14b, 14c, 14d) zur Spieleinstellung der Gleitführung (27, 27a, 27b) quer zur Führungsrichtung des Führungsprofils (12, 12a) und quer zur Längsachse der Bohrungen (50) bewegbar sind.

2. Linearführungseinheit (10, 10a, 10b) nach Anspruch 1, **dadurch gekennzeichnet, daß** das Verstellelement (52, 54) ein Bolzen ist, daß an mindestens einer Stirnseite des Bolzens (50) ein Zapfen (54) exzentrisch ausgebildet ist und daß die Gleitelemente (14, 14b, 14c, 14d) Ausnehmungen (48, 74) aufweisen, wobei der Bolzen (52) durch die Bohrungen (50) führbar ist und der Zapfen (54) in die Ausnehmungen (48) greift.

3. Linearführungseinheit (10, 10a, 10b) nach Anspruch 1, **dadurch gekennzeichnet, daß** die Gleitelemente (14d) Einstellfortsätze (76) aufweisen, die von dem durch die Bohrungen (50) im Schlitten (16, 16a, 16b) führbaren Verstellelement (52) umgriffen sind.

4. Linearführungseinheit (10, 10a, 10b) nach einem der Ansprüche 1 bis 3, **dadurch gekennzeichnet, daß** die Gleitelemente (14, 14b, 14c, 14d) mindestens zweite Fortsätze (32) aufweisen, die senkrecht zu den mindestens ersten Fortsätzen (26, 26c) verlaufen und zwischen dem Schlitten (16, 16a, 16b) und dem Führungsprofil (12, 12a) angeordnet sind, und daß die mindestens zweiten Fortsätze (32) Gleitflächen (34) haben, die am Führungsprofil (12, 12a) aufliegen.

5. Linearführungseinheit (10, 10a, 10b) nach Anspruch 4, **dadurch gekennzeichnet, daß** in den Gleitflächen (34) Ausnehmungen (36) zur Aufnahme von Schmiermittel ausgebildet sind.

6. Linearführungseinheit (10, 10a) nach Anspruch 3 oder 4, **dadurch gekennzeichnet, daß** entlang mindestens einer längsseitigen Außenfläche (20) des Schlittens (16, 16a) Nuten (24) ausgebildet sind, in die mindestens dritte Fortsätze (38, 38c, 38d) der Gleitelemente (14, 14dc, 14d) greifen.

7. Linearführungseinheit (10, 10a, 10b) nach einem der Ansprüche 1 bis 6, **dadurch gekennzeichnet, daß** die Nuten (24) des Führungsprofils (12, 12a) einen Hinterschnitt (25) aufweisen und daß die mindestens ersten Fortsätze (26, 26c) der Gleitelemente (14, 14b, 14c, 14d) eine Form haben, die diesen Nuten (24) mit Hinterschnitt (25) angepaßt ist.

8. Linearführungseinheit (10, 10a, 10b) nach einem der Ansprüche 1 bis 7, **dadurch gekennzeichnet, daß** die Gleitelemente (14, 14b, 14c, 14d) eine Fläche (40) mit einer keilförmigen Nut (42) aufweisen.

## Claims

1. Linear guide unit (10, 10a, 10b) with a sliding guide (27, 27a, 27b) for a carriage (16, 16a, 16b) on a guide profile (12, 12a), and with at least two sliding elements (14, 14b, 14c, 14d) which can be fixed on the carriage (16, 16a, 16b) and can be guided with sliding action on the guide profile (12, 12a), it being the case that grooves (24) are formed along the longitudinal-side outer surfaces of the guide profile (12, 12a), at least first extensions (26, 26c) of the sliding elements (14, 14b, 14c, 14d) being guided in said grooves, or it being the case that the guide profile has extensions along its longitudinal-side outer surfaces, the extensions engaging in recesses which are formed on the sliding elements, **characterized in that** the sliding elements (14, 14b, 14c, 14d) have recesses (48, 74) or adjusting extensions (76), which interact with an adjusting element (52, 54) which serves as a tool, can be guided through bores (50) in the carriage (16, 16a, 16b) and by means of which the sliding elements (14, 14b, 14c, 14d), for the purpose of adjusting the play of the sliding guide (27, 27a, 27b), can be moved transversely to the guide direction of the guide profile (12, 12a) and transversely to the longitudinal axis of the bores (50).

2. Linear guide unit (10, 10a, 10b) according to Claim 1, **characterized in that** the adjusting element (52, 54) is a bolt, **in that** a stub (54) is formed eccentrically on at least one end side of the bolt (50), and **in that** the sliding elements (14, 14b, 14c, 14d) have recesses (48, 74), it being the case that the bolt (52) can be guided through the bores (50) and the stub (54) engages in the recesses (48).

3. Linear guide unit (10, 10a, 10b) according to Claim 1, **characterized in that** the sliding elements (14d) have adjusting extensions (76), the adjusting element (52), which can be guided through the bores (50) in the carriage (16, 16a, 16b), engaging around said adjusting extensions.

4. Linear guide unit (10, 10a, 10b) according to one of Claims 1 to 3, **characterized in that** the sliding elements (14, 14b, 14c, 14d) have at least second extensions (32) which run perpendicularly to the at least first extensions (26, 26c) and are arranged between the carriage (16, 16a, 16b) and the guide profile (12, 12a), and **in that** the at least second extensions (32) have sliding surfaces (34) which rest on the guide profile (12, 12a).

5. Linear guide unit (10, 10a, 10b) according to Claim 4, **characterized in that** recesses (36) for accommodating lubricants are formed in the sliding surfaces (34).

6. Linear guide unit (10, 10a) according to Claim 3 or 4, **characterized in that** grooves (24) are formed along at least one longitudinal-side outer surface (20) of the carriage (16, 16a), at least third extensions (38, 38c, 38d) of the sliding elements (14, 14c, 14d) engaging in said grooves.

7. Linear guide unit (10, 10a, 10b) according to one of Claims 1 to 6, **characterized in that** the grooves (24) of the guide profile (12, 12a) have an undercut (25), and **in that** the at least first extensions (26, 26c) of the sliding elements (14, 14b, 14c, 14d) are of a shape which is adapted to said grooves (24) with undercut (25).

8. Linear guide unit (10, 10a, 10b) according to one of Claims 1 to 7, **characterized in that** the sliding elements (14, 14b, 14c, 14d) have a surface (40) with a wedge-shaped groove (42).

## Revendications

1. Unité de guidage linéaire (10, 10a, 10b) comprenant un guide coulissant (27, 27a, 27b) pour un chariot (16, 16a, 16b) sur un profilé de guidage (12, 12a) et au moins deux éléments coulissants (14, 14b, 14c, 14d) fixés au chariot (16, 16a, 16b) et guidés en coulissement sur le profilé de guidage (12, 12a),
le long des grands côtés des surfaces extérieures du profilé de guidage (12, 12a) on a des rainures (24) recevant au moins les premiers prolongements (26, 26c) des éléments coulissants (14, 14b, 14c, 14d) ou le profilé de guidage comporte le long des surfaces extérieures de ses grands côtés, les prolongements pénétrant dans des cavités réalisées dans les éléments coulissants,
**caractérisée en ce que**
les éléments coulissants (14, 14b, 14c, 14d) comportent des cavités (48, 74) ou des prolongements de réglage (76) coopérant avec un élément de réglage (52, 54) servant d'outil qui passe dans des perçages (50) du chariot (16, 16a, 16b) et qui permet de déplacer les éléments coulissants (14, 14b, 14c, 14d) pour le réglage du jeu du guide coulissant (27, 27a, 27b) transversalement à la direction de guidage du profilé de guidage (12, 12a) et transversalement à l'axe longitudinal des perçages (50).

2. Unité de guidage linéaire (10, 10a, 10b) selon la revendication 1,
**caractérisée en ce que**
l'élément de réglage (52, 54) est une vis et au moins une face frontale de la vis (52) comporte un téton (54) excentré et les éléments coulissants (14, 14b, 14c, 14d) comportent des cavités (48, 74), la vis (52) traversant le perçage (50) et son téton (54) pénètre dans l'une des cavités (48).

3. Unité de guidage linéaire (10, 10a, 10b) selon la revendication 1,
**caractérisée en ce que**
les éléments coulissants (14d) comportent des prolongements de réglage (76) entourés par l'élément de réglage (52) guidé dans le perçage (50) du chariot (16, 16a, 16b).

4. Unité de guidage linéaire (10, 10a, 10b) selon l'une quelconque des revendications 1 à 3,
**caractérisée en ce que**
les éléments coulissants (14, 14b, 14c, 14d) comportent au moins des seconds prolongements (32) perpendiculaires au moins aux premiers prolongements (26, 26c) et installés entre le chariot (16, 16a, 16b) et le profilé de guidage (12, 12a) et au moins les seconds prolongements (32) ont des surfaces de glissement (34) s'appuyant contre le profilé de guidage (12, 12a).

5. Unité de guidage linéaire (10, 10a, 10b) selon la revendication 4,
**caractérisée en ce que**
les surfaces de glissement (34) comportent des cavités (36) pour recevoir l'agent de graissage.

6. Unité de guidage linéaire (10, 10a, 10b) selon l'une quelconque des revendications 3 ou 4,
**caractérisée en ce que**
le long d'au moins l'une des surfaces extérieures longitudinales (20) du chariot (16, 16a) il y a des rainures (24) dans lesquelles pénètrent au moins les troisièmes prolongements (38, 38c, 38d) des éléments coulissants (14, 14c, 14d).

7. Unité de guidage linéaire (10, 10a, 10b) selon l'une quelconque des revendications 1 à 6,
**caractérisée en ce que**
les rainures (24) du profilé de guidage (12, 12a) ont une contre-dépouille (25) et au moins les premiers prolongements (26, 26c) des éléments coulissants (14, 14b, 14c, 14d) ont une forme adaptée aux rainures (24) avec contre-dépouille (25).

8. Unité de guidage linéaire (10, 10a, 10b) selon l'une quelconque des revendications 1 à 7,
**caractérisée en ce que**
les éléments coulissants (14, 14b, 14c, 14d) ont une surface (40) avec une rainure (42) en forme de point.
